# EUROPEAN PATENT APPLICATION

(11) **EP 4 687 244 A1**
(43) Date of publication of application: **04.02.2026**
(21) Application number: 24191653.5
(22) Date of filing: 30.07.2024
(51) Int. Cl.: H02H 7/26, H02H 3/02, H01F 29/00

(54) **A DC ELECTRIC GRID**

(71) Applicant: ABB S.p.A., 20124 Milano (IT)
(72) Inventor: GREGIS, Gioele, 24060 San Paolo d'Argon (BG) (IT)
(74) Representative: De Bortoli, Eros

(57) **Abstract**

A DC electric grid comprising a plurality of electric nodes, one or more electric branches electrically connecting said electric nodes and a plurality of protection devices arranged at said electric branches.

Each protection device of the electric grid comprises a first terminal for coupling to a first branch portion and a second terminal for coupling to a second branch portion.

Each protection device further comprises a switching assembly including one or more switching devices and a magnetic device electrically connected in series with said switching assembly between the first and second terminals of said protection device.

The electric grid, according to the invention, further includes one or more control devices included in or operatively coupled to the above-mentioned protection devices.

Each control device is configured to control one or more switching devices of the switching assembly of one or more protection devices to cause said switching devices to switch selectively between a closed state and open state.

## Description

The present invention relates to the field of electric grids. More particularly, the present invention relates to a DC electric grid including protection devices arranged in such a way to provide improved circuit protection functionalities.

DC electric grids are widely adopted in a variety of applications, such as photovoltaic systems, naval systems, energy storage systems employing batteries, and the like.

As is known, when a fault event (such as a short-circuit) occurs in a DC electric line, many electrical components electrically connected to the electric line can potentially feed such an electric fault. Obviously, this may lead to catastrophic consequences, particularly when electric power generation systems (e.g., photovoltaic panels) or electric energy storage systems (e.g., batteries) are installed in the electric grid.

To prevent such an eventuality, a DC electric grid normally comprises protection devices configured in such a way to disconnect portions of electric grid, when necessary. Typically, these protection devices include switching devices of the solid-state or hybrid type.

A major challenge in the management of DC electric grids consists in carrying out these circuit disconnections with selectivity in such a way to disconnect only the portion of the electric grid where the fault arises and allow the remaining grid portions to continue to operate normally.

These problems derive from the circumstance that a DC electric grid is substantially an electric system with distributed capacitances. This implies that a fault current (e.g., a short-circuit current) typically takes similar values in any section of the electric grid and can reach high peak values in a short time (~ some µs).

Consequently, protection devices arranged in various positions in the electric grid intervene substantially at a same time when a fault event arises, even if they are differently sized and configured to intervene according to different fault threshold values. Any selective disconnection of possible faulted grid portions is therefore almost impossible.

In the state of the art, it is quite felt the demand for innovative solutions in DC electric grids, which allow achieving high selectively levels in disconnecting different grid portions, when an electric fault event occurs in such a way to prevent unnecessary out-of-service periods for electric grid portions that are still normally operating.

In order to fulfil this need, the present invention provides a DC electric grid, according to the following claim 1 and the related dependent claims.

In general terms, the DC electric grid, according to the invention, comprises a plurality of electric nodes, one or more electric branches electrically connecting said electric nodes and a plurality of protection devices arranged at said electric branches.

Each protection device of the electric grid comprises a first terminal for coupling to a first branch portion and a second terminal for coupling to a second branch portion.

Each protection device further comprises a switching assembly including one or more switching devices and a magnetic device electrically connected in series with said switching assembly between the first and second terminals of said protection device.

The electric grid, according to the invention, further includes one or more control devices included in or operatively coupled to the above-mentioned protection devices.

Each control device is configured to control one or more switching devices of the switching assembly of one or more protection devices to cause said switching devices to switch selectively between a closed state and open state.

According to the invention, each protection device includes a magnetic device having an inductance value for a given current flowing through said protection device, which is selected depending on the position of said protection device in said electric grid.

Preferably, for a given current flowing along a current path of said electric grid according to a given direction, the magnetic device of a protection device, which is arranged in an upstream position along said current path, has a lower impedance value than the magnetic device of a further protection device, which is arranged in a downstream position along said current path. According to an aspect of the invention, the magnetic device of each protection device has an inductance value that can vary in operation depending on the current flowing through said protection device.

Preferably, the magnetic device of each protection device has:
- a first inductance value, if the current flowing through said protection device is lower than or equal to a characteristic threshold value;
- a second inductance value, if the current flowing through said protection device is higher than a characteristic threshold value.

Preferably, said first inductance value is lower than said second inductance value.

According to an aspect of the invention, a control device included in or operatively coupled to a protection device causes one or more switching devices of said switching assembly to switch from a closed state to an open state to interrupt the current flowing through said protection device, when said control device determines that the current flowing through said protection device exceeds a fault threshold value corresponding to said protection device. According to some embodiments of the invention, the switching assembly of each protection device includes one or more switching devices of the solid-state type.

According to other embodiments of the invention, the switching assembly of each protection device includes one or more switching devices of the electromechanical type.

According to an aspect of the invention, the magnetic device of each protection device includes:
- a magnetic circuit including a magnetic body and one or more permanent magnets coupled to said magnetic body and feeding said magnetic body with a corresponding magnetic flux, when said permanent magnets are in a magnetized condition;
- one or more excitation coils adapted to be fed with a current flowing through said protection device, each excitation coil feeding said magnetic body with a corresponding magnetic flux, when said excitation coil is fed.

The one or more permanent magnets generate a magnetic flux bringing said magnetic body in a saturated condition in absence of a current feeding said one or more excitation coils.

At least one excitation coil is wound on said magnetic body in such a way to generate a magnetic flux having an opposite direction compared to the direction of the magnetic flux generated by said permanent magnets.

Further characteristics and advantages of the present invention shall emerge more clearly from the description of preferred but not exclusive embodiments illustrated purely by way of example and without limitation in the attached drawings, in which:
Figures 1, 2, 3A-3D schematically illustrate the electric grid, according to the invention;
Figures 4, 5, 5A, 6-9 are diagrams schematically illustrating the behaviour of protection devices included in the electric grid, according to various embodiments of the invention;
Figure 10-11 are diagrams schematically illustrating the operation of protection devices included in the electric grid of the invention, according to various embodiments of the invention.

With reference to the cited figures, the present invention relates to a DC electric grid 100. The DC electric grid 100 may be a low or medium voltage electric power distribution grid.

Within the framework of the present invention, the term "low voltage" relates to operational voltages up to 1.5 kV DC (which may be extended even to 3 kV) whereas the term "medium voltage" generally relates to operational voltages higher than 2.5 kV DC up to several tens of kV, e.g. up to 100 kV DC.

The electric grid 100 may be employed in industrial, commercial, and residential buildings or plants. As an example, it may be characterised by average power consumption levels in the range between 0.05 MW and 10 MW.

The electric grid 100 comprises a plurality of electric nodes N₁, N₂, N₃, N₄, ..., N_{P} and one or more electric branches B₁, B₂, B₃, ..., B_{R} electrically connecting said electric nodes.

The electric grid 100 can be electrically connected to one or more electric loads EL₁, EL₂, EL₃, ..., EL_{T}, each of which is fed with a certain amount of electric power provided by the electric grid. The electric loads may be electrically connected to various electric branches of the electric grid, according to the needs.

In principle, the electric loads may be of any type, according to the needs. For example, they may be electric motors, electrical systems, electrical appliances, or the like. In general terms, an electric load may be any device or system consuming an amount of electric power in operation.

The electric grid 100 can be electrically connected to one or more electric power sources EG₁, EG₂, ..., EG_{Q}, each of which feeds the electric grid with a certain amount of electric power. The electric power sources may be electrically connected to various electric branches of the electric grid, according to the needs.

In principle, the electric power sources may be of any type. For example, they may be solar panel plants, wind turbine plants, combined heat and power systems, marine power generation systems, diesel power generation systems, geothermal or biomass power generation systems, energy storage systems, and the like. In general terms, an electric power source may be any device or system generating an amount of electric power in operation.

The electric grid 100 may be electrically connected to further electric systems 101, 102 according to the needs. These further electric systems may be of any type, and they may behave as equivalent electric loads or equivalent electric power sources depending on their operating conditions.

During the operation of the electric grid 100, DC electric currents flow through the above-mentioned electric branches and electric nodes.

DC electric currents can always flow according to a same direction. This may occur, for example, when the electric grid 100 is electrically connected to a sole electric power source (e.g., a further electrical system) and to one or more electric nodes.

As an alternative, DC electric currents can flow according to opposite directions. This may happen, for example, when the electric grid 100 is electrically connected to multiple electric power sources and/or is electrically connected to electrical systems that can change their behaviour (as electric loads or electric power sources) depending on their operating conditions. The electric grid 100 comprises a plurality of protection devices Pi, P₂, P₃, P₄, ..., Ps for electrically disconnecting or connecting electric loads, power sources and/or electric branches from or with the remaining portions of the electric grid.

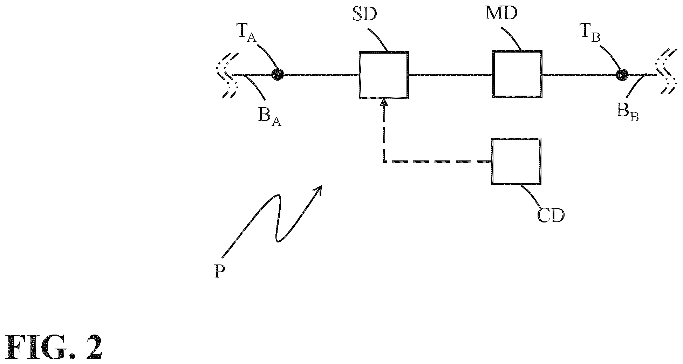

Figure 2 schematically shows a generic protection device P included in the electric grid 100.

The protection device P comprises a first terminal T_{A} for coupling to a corresponding first branch portion B_{A} of an electric branch and a second terminal T_{B} for coupling to a second branch portion B_{B} of said electric branch.

The protection device P comprises a switching assembly SD including one or more switching devices electrically connected to the first and second terminals T_{A}, T_{B}.

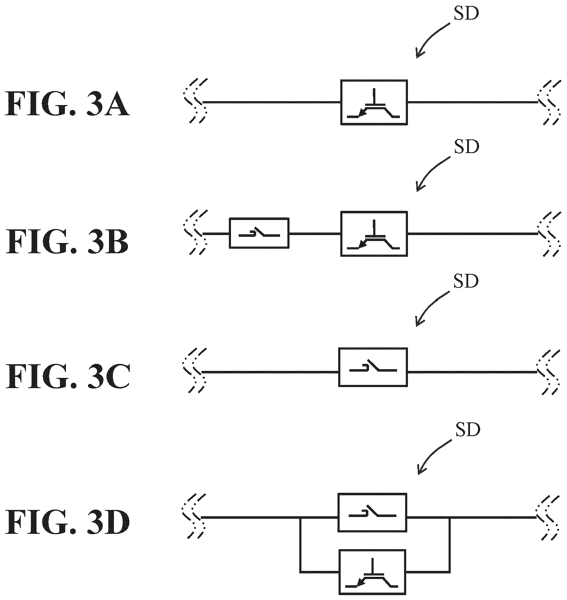

According to some embodiments of the invention, the switching assembly SD includes one or more switching devices of the solid-state type (figure 3A), i.e. based on semiconductor materials. In general, the solid-state switching devices may be of conventional type, such as, for example, MOSFETs, JFETs, IGBTs), GTOs, IGCTs, or the like.

In response to receiving suitable input control signals, each solid-state switching device can reversibly switch between a closed state (on-state), at which it conducts a current, and an open state (off-state), at which it blocks a current.

A solid-state switching device is turned off when it switches from an on-state to an off-state, and it is turned on when it switches from an off-state to an on-state.

Preferably, each switching device of the solid-state type is electrically connected in parallel to a protection circuit (not shown) adapted to protect said switching device (e.g. from voltage transients) and dissipate energy, whenever necessary. A protection circuit may be integrated with the associated switching device, and it can include, for example, snubbers, spark gaps, discharge tubes, Metal-Oxide Varistors, or suitable semiconductor components.

When DC currents can flow according to a sole direction through the protection device, the switching assembly SD can include a single switching device of the solid-state type or a plurality of switching devices of the solid-state type electrically connected in series.

When DC currents can flow according to opposite directions through the protection device P, the switching assembly SD advantageously include multiple switching devices of the solid-state type arranged according to an anti-parallel or anti-series configuration.

According to some embodiments of the invention, the switching assembly SD includes at least a switching device of the electromechanical type electrically connected in series to the above-mentioned one or more switching devices of the solid-state type (figure 3B).

Each switching device of electromechanical type has electric contacts that can be mechanically coupled or separated to conduct or block a current, respectively.

Each switching device of electro-mechanical type is in a closed state when its electric contacts are mutually coupled to conduct a current, whereas it is in an open state when its electric contacts are mutually uncoupled to block a current.

The one or more switching devices of electro-mechanical type can be of the self-acting type for what concerns the execution of an opening manoeuvre. In this case, the transition from a closed state to an open state (opening manoeuvre) occurs by exploiting electrodynamic forces generated by the circulation of current through the protection device.

Alternatively, the one or more switching devices of electro-mechanical type can be of the fully controllable type. In this case, any transition from a closed state to an open state (opening manoeuvre) or from an open state to a closed state (closing manoeuvre) occurs in response to receiving suitable input control signals, which cause the activation of a driving mechanism moving the movable contacts or tripping the motion of said movable contacts.

The arrangement of one or more additional electromechanical switching devices electrically connected in series with the one or more switching devices of the solid-state type ensures a galvanic separation between the electric terminals T_{A}, T_{B} when the protection device intervenes to interrupt a current passing therethrough.

According to further embodiments of the invention, the switching assembly SD includes one or more switching devices of the electro-mechanical type, preferably a single switching device of the electro-mechanical type (figure 3C).

Each switching device of electromechanical type has electric contacts that can be mechanically coupled or separated to conduct or block a current, respectively.

Each switching device of electro-mechanical type is in a closed state when its electric contacts are mutually coupled to conduct a current, whereas it is in an open state when its electric contacts are mutually uncoupled to block a current.

According to these embodiments of the invention, at least one among the one or more electromechanical switching devices of the switching assembly SD is of the fully controllable type. Possible additional electromechanical switching devices may be either of the self-acting type or the fully controllable type.

According to further embodiments of the invention, the switching assembly SD includes one or switching devices of the solid-state type electrically connected in parallel to said one or more one or more switching devices of the electro-mechanical type (figure 3D).

In general, the switching devices included in the protection devices of the electric grid 100 may be realized according to solutions of known type. Therefore, they will be described in the following only in relation to the aspects of interest for the invention.

According to the invention, the electric grid 100 includes one or more control devices CD included in or operatively coupled to the above-mentioned protection devices.

Each control device CD is configured to control one or more switching devices to cause the latter to switch selectively between a closed state and open state. To this aim, each control device is configured to send suitable control signals to the controlled switching devices.

Preferably, each control device CD is configured to receive suitable detection signals from one or more sensors arranged to monitor the behaviour of currents, voltages, and/or other physical quantities and is configured to process these detection signals to generate the control signals needed to operate the controlled switching devices.

According to some embodiments of the invention, a given control device CD may be operatively coupled to a single corresponding protection device to control one or more switching devices of said protection device. In this case, the control device may be, for example, a controller included in said protection device or arranged as a stand-alone device coupled to said protection device.

According to other embodiments of the invention, a given control device CD may be operatively coupled to multiple protection devices to control one or more switching devices of said protection devices. In this case, a given control device may be, for example, a digital relay operatively associated to multiple protection devices or mounted on a given protection device. Preferably, each control device CD is configured to process the detection information provided by the above-mentioned sensors and check whether certain criteria for operating the controlled switching devices are satisfied. More specifically, each control device CD is configured to cause one or more switching devices of an associated protection device to switch from a closed state to an open state to interrupt the current flowing through said protection device, when such a control device determines that the current flowing through the protection device exceeds a fault threshold value set for said protection device.

In other words, a control device CD included in or operatively coupled to a given protection device is configured to cause said protection device to interrupt the current flowing therethrough, if it determines that said current is a fault current (e.g., a short-circuit current). Preferably, a control device CD calculates a current value indicative of the current flowing through the associated protection device based on the received detection information and compares the calculated current value with a fault threshold value set for said protection device. If the calculated current value exceeds said current threshold value, the control device CD generates suitable control signals to switch one or more switching devices of the protection device in an open state in such a way to interrupt the current flowing through said protection device.

The control devices CD may obviously carry out other functionalities in addition to those described above. For example, a given control device may provide control signals to operate one or more switching devices of an associated protection device upon receiving suitable input signals from an HMI or from a remote computerised device.

According to the invention, each protection device of the electric grid comprises a magnetic device MD electrically connected in series to the switching assembly SD between the first and second terminals T_{A}, T_{B}.

The magnetic device MD of each protection device is preferably formed by an inductor including a magnetic body and one or more excitation windings wound around said magnetic body. Said one or more excitation windings are electrically connected in series one to another and to the switching assembly SD. In this way, they can be fed with the current passing through the protection device.

According to the invention, the magnetic device MD of each protection device has, for a given current flowing through said protection device, an inductance value L that can vary depending on the position at which said protection device is arranged in the electric grid.

In other words, the magnetic device MD of each protection device has a different (first) magnetization curve, which is selected depending on the position of the protection device in the electric grid.

A magnetic device MD may be designed to have a certain magnetization curve by suitably selecting the structural parameters of said magnetic device (e.g., the geometric parameters of the magnetic body and of the one or more excitation coils), which influence the magnetic behaviour of said magnetic device.

Preferably, for a given current flowing along a current path of the electric grid according to a given direction, the magnetic device MD of a protection device arranged in an upstream position along said current path has a lower impedance value than the magnetic device of another protection device arranged in a downstream position along said current path.

For the sake of clarity, the relative terms "upstream position" and "downstream position" are referred to the direction of the current along the current path taken into consideration.

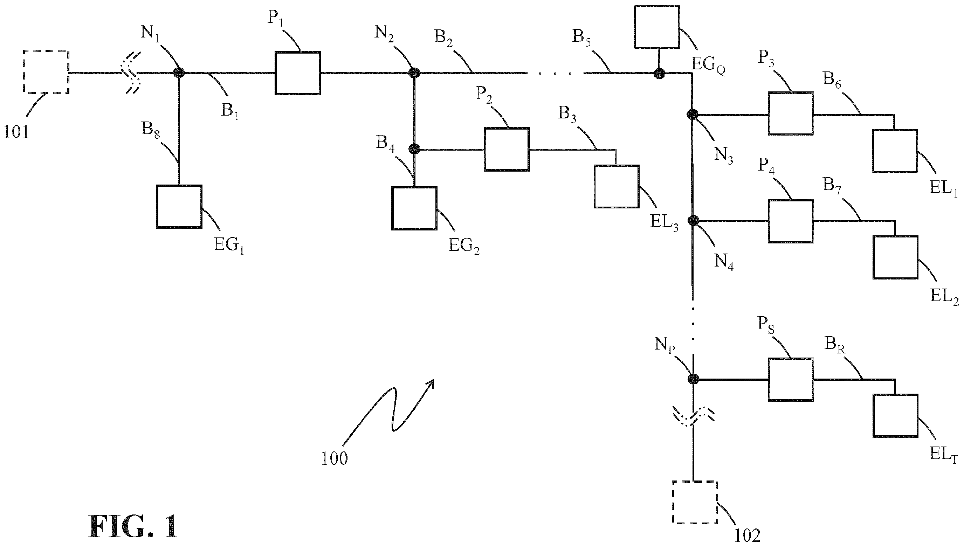

Referring to figure 1, let us consider, as an example, a current path extending along the branches B₁, B₂, Be of the electric grid. Along such a current path, the protection devices P₁ and P₃ are arranged respectively in an upstream position and in a downstream position (the current is supposed to be directed towards the electric load E_{L1}).

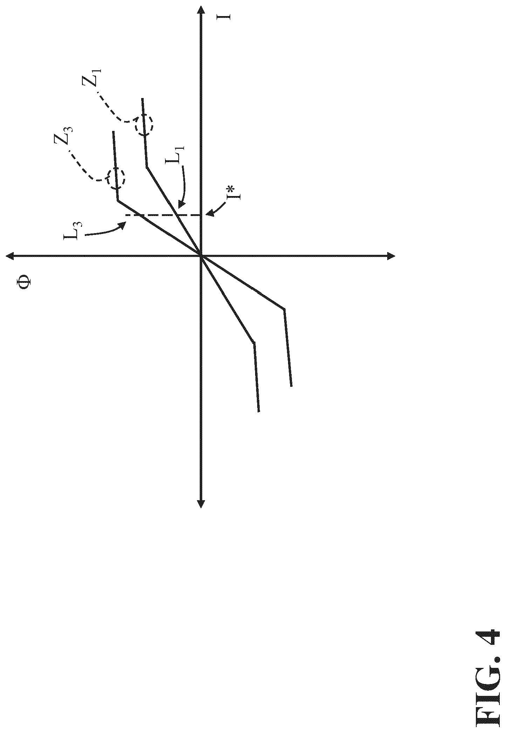

Being arranged in distinct positions, the magnetic devices MD of the protection devices P₁ and P₃ have different magnetization curves Z₁ and Z₃ (figure 4). These magnetization curves are configured in such a way that, for a given current I* flowing along the above-mentioned current path, the magnetic device MD of the first protection device Pi has an inductance value L₁ lower than the inductance value L₃ of the magnetic device MD of the third protection device P₃. The solution provided by the claimed invention allows managing the protection devices of a DC electric grid with elevated levels of selectivity. Therefore, when a fault event occurs, it is possible to disconnect specific grid portions and allow the remaining grid portions to continue to operate normally.

As an example, let us consider again the above-mentioned current path extending along the branches B₁, B₂, B₆ of the electric grid (figure 1). As mentioned above, the protection devices P₁, P₃ are arranged in upstream and downstream positions along such a current path. The protection devices P₁, P₃ are differently sized and are characterised by different fault threshold values I_{TH1}, I_{TH3}, with I_{TH1} > I_{TH3}.

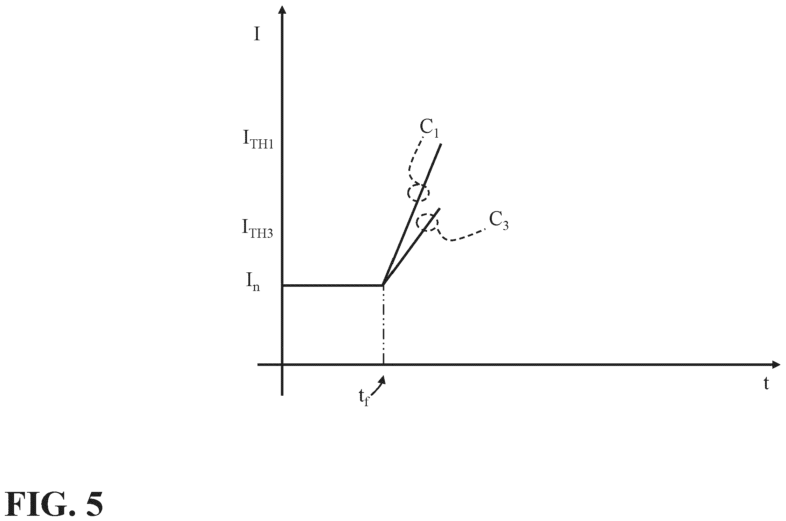

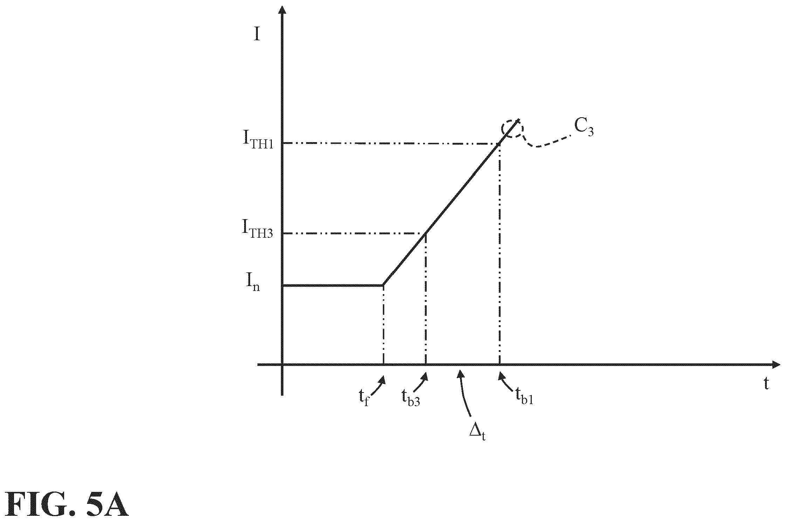

The magnetic devices MD of the protection devices P₁ and P₃ have different magnetization curves Z₁ and Z₃ (figure 4), the fault current raises in time with different rates of change (figure 5) at the protection devices P₁ and P₃.

In normal conditions, a DC current flowing through the protection devices P₁, P₃ takes substantially a same nominal value Iₙ as the magnetic devices MD of these protection devices substantially operate as short-circuits.

If an electric fault occurs, a fault current starts flowing along the above-mentioned current path to feed the electric fault.

Since the magnetic devices MD of the protection devices P₁ and P₃ have different magnetization curves Z₁ and Z₃, the behaviour of the fault current depends on the position of the electric fault relative to the protection devices P₁ and P₃.

If the electric fault occurs downstream both the protection devices P₁ and P₃, the fault current raises more slowly (curve C₃) as the magnetic device MD of the third protection device P₃ has a higher inductance value L₃.

If the electric fault occurs downstream both the protection device Pi and upstream the protection devices P₁, the fault current raises more quickly (curve C₁) as the magnetic device MD of the first protection device P₁ has a lower inductance value L₁.

The behaviour (namely the slope) of the fault current feeding the electric fault is therefore a sort of "signature," which allows identifying the position of the electric fault.

If the protection devices P₁ and P₃ did not include magnetic devices MD having different magnetization curves Z₁ and Z₃, the behaviour of the fault current would be quite similar even if the electric fault occurs at different positions along the above-mentioned current path.

Figure 5A shows the behaviour of the protection devices P₁, P₃ when an electric fault (for example a short circuit) occurs at the electric load ELi (downstream both the protection devices P3 and P₃) at the fault instant t_{f}.

A fault current flows along the above-mentioned current path to feed the electric fault and raises according to the above-mentioned curve C₃, which has a slope that depends on the inductance value L₃ of the magnetic device MD of the third protection device P₃.

At the intervention instant t_{b3}, the protection device P₃ interrupts the current passing therethrough as this latter exceeds the fault threshold value I_{TH3} set for this protection device. If the electric fault is cleared by the intervention of the protection device P₃, the current passing through the first protection device Pi stabilizes and will start decreasing towards a new nominal value. The protection device Pi thus does not intervene. A normal operation of other grid portions (for example the electric branches B₇, ..., B_{R}) can be ensured despite of the fault event. If the electric fault is not cleared by the intervention of the protection device P₃, the current passing through the first protection device Pi continues to raise until it exceeds the fault threshold value I_{TH1} set for this protection device. In this case, the protection device Pi interrupts the current passing therethrough at the subsequent intervention instant t_{b1}. All the grid portions downstream the first protection device Pi are disconnected from the electric grid.

A suitable time delay Δt is introduced between the intervention instants t_{b3} and t_{b1}, at which the protection devices P₁, P₃ would intervene to interrupt the current. This allows the protection device P₃ to intervene well before the protection device Pi. Therefore, before intervening, the first protection device P1 has sufficient time (from a computational point of view) to identify the position of the electric fault and check whether the intervention of the protection device P₃ has cleared the electric fault. In this last case, the protection device Pi will not intervene, and the faulted grid portion (the electric branch B₆) will be selectively disconnected.

According to preferred embodiments of the invention, the magnetic devices of each protection device of the electric grid is arranged in such a way to have an inductance value that can vary also depending on the current flowing through the protection device.

More specifically, according to these embodiments of the invention, the magnetic device MD of each protection device takes:
- a first inductance value L_{A}, if the current flowing through the protection device is lower than or equal to a characteristic threshold value I₀;
- a second inductance value L_{B}, if the current flowing through the protection device is higher than the characteristic threshold value I₀.

Advantageously, the above-mentioned first inductance value L_{A} is lower than the above-mentioned second inductance value L_{B}.

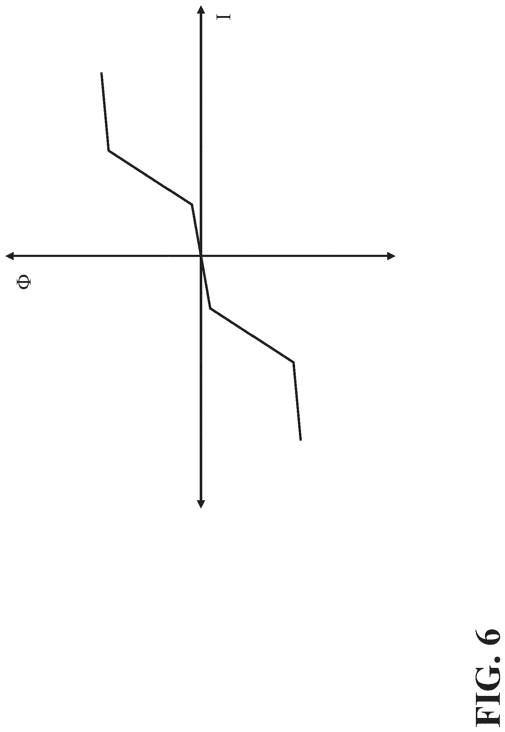

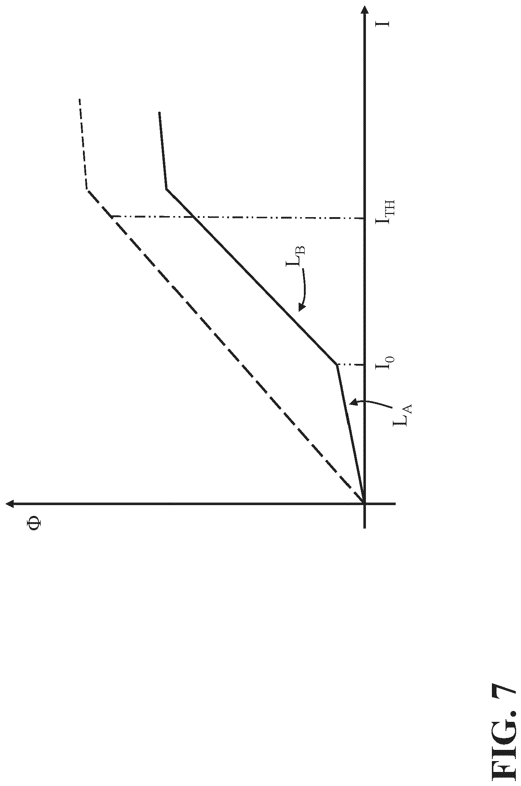

Figures 6 shows a magnetization curve for a magnetic device MD realized according to these last embodiments of the invention. In figure 7, such a magnetization curve is compared to the magnetization curve (dotted line) of a generic magnetic device. It is apparent how the magnetization curve of the magnetic device has different rates of change (inductance values) depending on the current circulating along the excitation windings of the magnetic device.

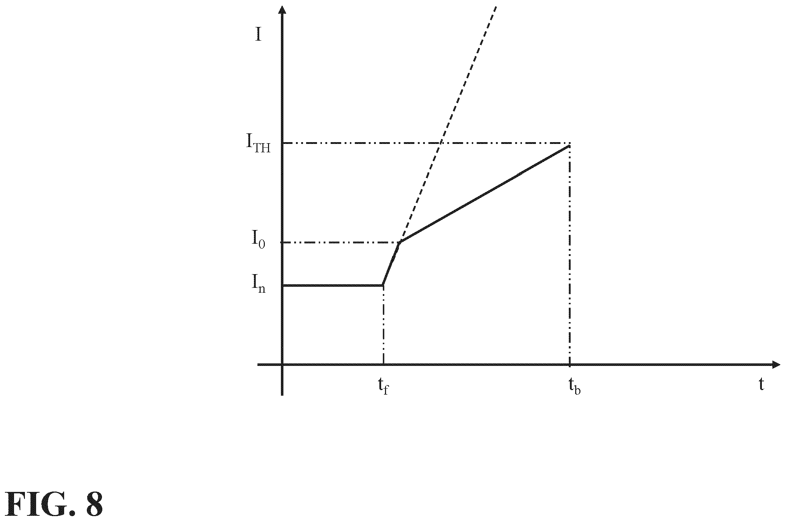

Figure 8 shows the behaviour of a protection device equipped with a magnetic device MD according to these last embodiments of the invention.

In normal conditions, a current having a nominal value Iₙ flows through the protection device. If an electric fault (for example a short circuit) occurs at the fault instant t_{f}, a fault current flows through the protection device. Initially, the fault current increases in time with a higher rate of change as the magnetic device MD has a lower inductance value L_{A} for currents lower than the characteristic current threshold value I₀. As soon as it exceeds the characteristic current threshold value I₀, the fault current raises with a lower rate of change as the magnetic device MD has a higher inductance value L_{B}.

As it is possible to notice, the behaviour of a protection device in presence of an electric fault can be suitably tuned by suitably selecting the different inductance values L_{A}, L_{B} characterising the magnetization curve of the magnetic device MD.

The solution employed in these embodiments of the invention is quite advantageous as it allows differentiating more easily the magnetization curves of the magnetic devices MD of the various protection devices of the electric grid. As a result, improved levels of selectivity can be achieved while disconnecting the various grid portions.

As an example, let us consider again the above-mentioned current path extending along the branches B₁, B₂, B₆ of the electric grid (figure 1).

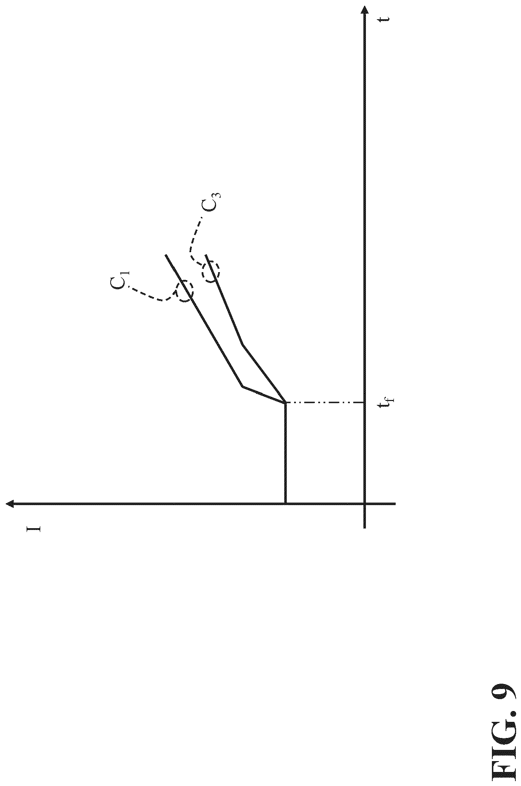

Again, since the magnetic devices MD of the protection devices P₁ and P₃ have different magnetization curves Z₁ and Z₃, the behaviour of the fault current depends much more on the position of the electric fault relative to the protection devices P₁ and P₃ (figure 9).

If the electric fault occurs downstream both the protection devices P₁ and P₃, the fault current raises more slowly (curve C₃) as the magnetic device MD of the third protection device P₃ has a higher inductance value L₃.

If the electric fault occurs downstream both the protection device Pi and upstream the protection devices Pi, the fault current raises more quickly (curve Ci) as the magnetic device MD of the first protection device Pi has a lower inductance value L₁.

As it is possible to appreciate, the adoption of magnetic devices with highly differentiated magnetization curves allows differentiating more effectively the behaviour of the fault current depending on the position of the electric fault.

This latter can thus be identified much more effectively, which allows carrying out the electrical disconnection of different grid portions with higher levels of selectivity.

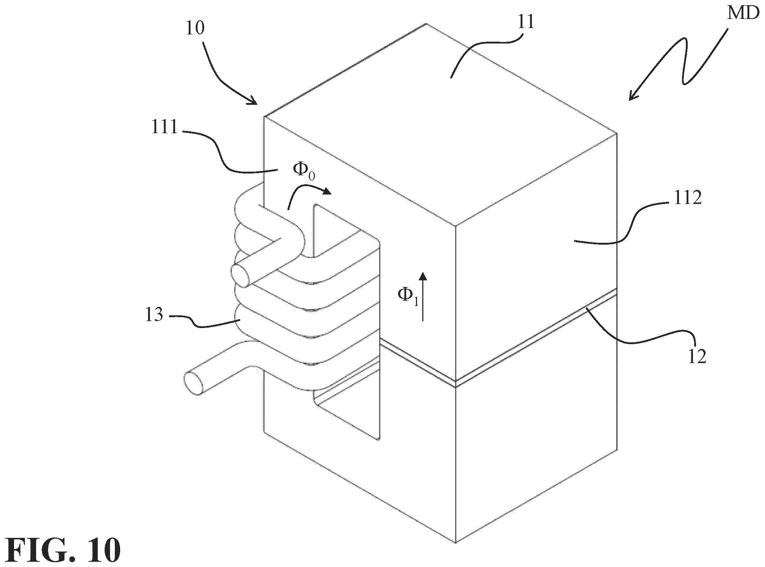

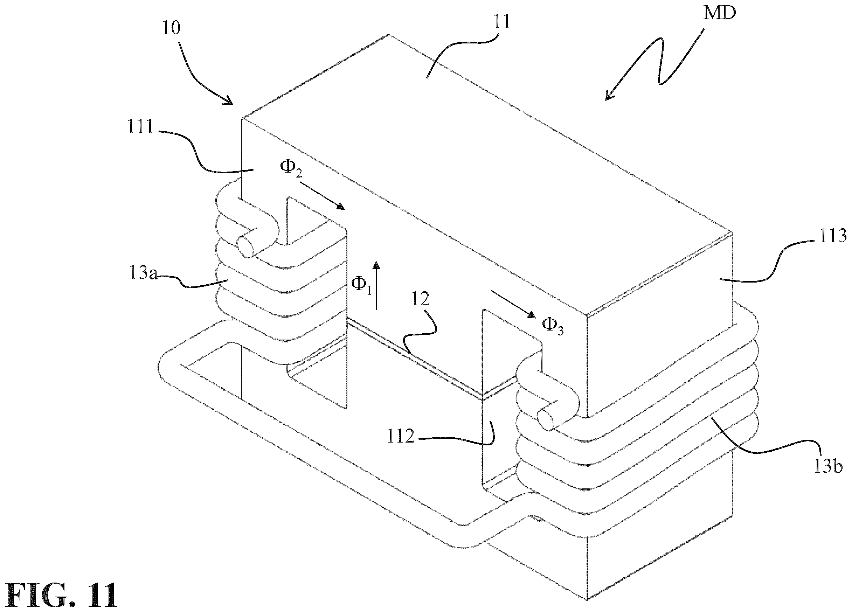

Figure 10 and 11 show different variants of a magnetic device MD realized according to these last embodiments of the invention.

The magnetic device MD comprises a magnetic circuit 10 configured to form one or more magnetic loops.

The magnetic circuit 10 includes a magnetic body 11, e.g., made of ferromagnetic iron or another material having suitable magnetic properties.

The magnetic body 11 may be realized according to know solutions of the state of the art. For example, it may be formed by a single shaped piece of magnetic material or by distinct pieces of magnetic material joined one to another.

According to the variant of figure 10, the magnetic body 11 includes a first branch 111 and a second branch 112 forming a single magnetic loop.

According to the variant of figure 11, the magnetic body 11 includes a first branch 111, a second branch 112 and a third branch 113. The first and second branches 111, 112 are arranged at opposite sides of the third branch 113. The magnetic circuit 10 includes a first magnetic loop formed by the first and second branches 111, 112 and a second magnetic loop formed by the second and third branches 112, 113.

Preferably, the opposite first and second branches 111, 112 are arranged such that the magnetic body 11 has an overall symmetric configuration.

Advantageously, in both the variants of figures 10-11, the magnetic body 11 can include one or more airgaps (not shown), which can be located at one or more branches of the magnetic body. The magnetic circuit 10 further includes one or more permanent magnets 12 coupled to the magnetic body 11 and arranged in such a way to feed said magnetic body with a magnetic flux Φ₁ having a predefined direction, when said permanent magnets are in a magnetized condition. To this aim, the permanent magnets 12 are preferably sandwiched between opposite facing portions of the magnetic body 11 as shown in figures 10-11.

In both the embodiments shown in figures 10-11, the permanent magnets 12 are coupled with the second branch 112 of the magnetic body 11.

The magnetic device MD further comprises one or more excitation coils 13, 13a, 13b that are adapted to be fed with a current flowing through the protection device, in which the magnetic device is arranged. The one or more excitation coils 13, 13a, 13b are thus electrically connected in series with the switching assembly SD between the first and second terminals T_{A}, T_{B} of the protection device.

Each excitation coil 13, 13a, 13b is wound on the magnetic body 11 to feed said magnetic body with a corresponding magnetic flux Φ₀, Φ₂ and Φ₃, when said excitation coil is fed with a current passing through the protection device.

In the embodiment of figure 10, the magnetic device MD includes a single excitation coil 13 wound around the first branch 111 of the magnetic body while, in the embodiment of figure 11, the magnetic device MD includes first and second excitation coils 13a, 13b wound on the first and third branches 111, 113 of the magnetic body. The first and second excitation coils 13a, 13b are arranged in such a way that currents having opposite directions flow along said excitation coils.

A first important aspect of these embodiments of the invention consists in that the permanent magnets 12 are arranged in such a way to generate a magnetic flux Φ₁, which is sufficiently high to bring the magnetic circuit 10 in a saturated condition.

A further important aspect of these embodiments of the invention consists in that at least one excitation coil 13, 13a is wound on the magnetic body 11 in such a way to generate a corresponding magnetic flux having an opposite direction compared to the magnetic flux Φi generated by the permanent magnets 12, when said excitation coil is fed with a current flowing through the protection device.

In the embodiment of figure 10, the sole excitation coil 13 generates a magnetic flux Φ₁ having an opposite direction compared to the magnetic flux Φi generated by the permanent magnets. In the embodiment of figure 11, the current feeding the excitation coils 13a, 13b is conventionally assumed to have a direction such that the first excitation coil 13a generates a magnetic flux Φ₂ having an opposite direction compared to the magnetic flux Φ₁ generated by the permanent magnets and the second excitation coil 13b generates a magnetic flux Φ₃ having the same direction of the magnetic flux Φi generated by the permanent magnets. It is evidenced that the magnetic fluxes Φ₂, Φ₃ generated by the excitation coils 13a, 13b may conventionally have opposite directions depending on the direction of the current feeding said excitation coils. The above-illustrated solution allows to bring the magnetic circuit 10 in a saturated condition or in linear condition depending on the current flowing through the protection device and feeding the one or more excitation coils. In turn, this allows obtaining a magnetization curve for the magnetic device, according to which the magnetic device can take different values of inductance depending on the current flowing through the protection device.

With reference to the embodiment of figure 10, the operation of the magnetic device MD is explained in more details.

As mentioned above, in absence of a current feeding the excitation coil 13 of the magnetic device, the permanent magnets 12 generate a magnetic flux Φ₁ bringing the magnetic circuit 10 in a saturated condition.

If the current flowing through the protection device and feeding the excitation coil 13 is lower than or equal to a characteristic threshold value I₀, the magnetic circuit 10 remains in a saturated condition as the magnetic flux Φ₁, which is generated by the permanent magnets 12, is still higher than the magnetic flux Φ₀, which is generated by the excitation coil 13.

The magnetic device MD has a first inductance value L_{A}, which is relatively low (figure 7).

It is evidenced how the first inductance value L_{A} can be tuned according to the needs by suitably designing the geometric parameters of the magnetic body 11, the excitation coil 13 and of possible airgaps in the magnetic body 11.

When the current flowing through the protection device and feeding the excitation coil 13 exceeds the characteristic threshold value I₀, the magnetic circuit 10 enters in a linear condition as the magnetic flux Φ₁, which is generated by the permanent magnets 12, becomes lower than the magnetic flux Φ₀, which is generated by the excitation coil 13.

The magnetic device MD now takes a second inductance value L_{B}, which is higher than the first inductance value L_{A} (figure 7). Also, the second inductance value L_{B} can be tuned according to the needs by suitably designing the geometric parameters of the magnetic body 11, the excitation coil 13 and of possible airgaps in the magnetic body 11.

Obviously, if the current flowing through the protection device and feeding the excitation coil 13 continues to increase, the magnetic circuit 10 is brought again is a saturated condition as the magnetic flux Φ₀, which is generated by the excitation coil 13, would be sufficiently high to saturate magnetic circuit. However, the current would exceed the fault threshold value set for the protection device, which would intervene to interrupt it.

It is evidenced how the magnetic device MD operates as described above only if the current flowing through the protection device and feeding the excitation coils 13 takes a certain predefined direction. In this case, in fact, the magnetic device MD has an overall asymmetric configuration.

The operation of the magnetic device MD is substantially the same, when realized according to the variant of figure 11.

In this case, depending on the direction of the current flowing along the excitation coils, the magnetic flux Φ₂ generated by the excitation coil 13a or the magnetic flux Φ₃ generated by the excitation coil 13b has an opposite direction compared to the magnetic flux Φ₁, which is generated by the permanent magnets 12.

The magnetic circuit 10 is brought in saturated condition or in a linear condition depending on whether the magnetic flux Φ₁, which is generated by the permanent magnets 12, is higher or lower than the sum of the fluxes Φ₂, Φ₃ generated by the excitation coils 13a, 13b and having opposite directions compared to the magnetic flux Φi.

In this case, however, the magnetic device MD operates as illustrated above independently from the direction of the current flowing through the protection device and feeding the excitation coils 13a, 13b. In the variant of figure 11, in fact, the magnetic device MD has an overall symmetric configuration.

The magnetic device MD may be realized according to further variants operating similarly to the variants shown in figures 10 and 11.

In principle, the magnetic body 11 may have any shape provided that one or more magnetic loops are formed. Additionally, the permanent magnets 12 and the excitation coils 13, 13a, 13b can be coupled to any section of the magnetic body 11. Also, possible airgaps in the magnetic body 11 can be arranged in any position along the magnetic body 11.

The electric grid according to the invention provides relevant technical advantages.

The electric grid, according to the invention, includes protection devices equipped with magnetic devices having different magnetization curves depending on the position of said protection devices. This allows tuning the intervention instants of the different protection devices. A selective disconnection of grid portions can thus be easily conducted. To this aim, there can be adopted selectivity criteria like those normally applied in AC electric grids. As a result, the management of the electric grid, according to the invention, is facilitated compared to commonly available DC electric grids.

According to preferred embodiments, the electric grid, according to the invention, includes protection devices equipped with magnetic devices having different inductance values depending on the current flowing through said protection devices.

The embodiments of the invention are quite advantageous as they allow differentiating more easily the magnetization curves of the magnetic devices of the protection devices in the electric grid. As a result, improved levels of selectivity can be achieved while disconnecting grid portions. In practice, the most convenient protection device can be selected for intervention more easily, which helps to avoid or limit possible out of service periods for normally operating grid portions.

The electric grid, according to the invention, can be managed in an efficient and robust manner. At the same time, unnecessary over-shedding interventions of normally operating grid portions can be avoided or reduced, when a fault event occurs.

The electric grid, according to the invention, can be realized according to various architectures, according to the needs, for example according to a multi-level or meshed architectures.

The electric grid, according to the invention, is of relatively easy and cost-effective practical implementation on the field.

## Claims

1. A DC electric grid (100) comprising a plurality of electric nodes, one or more electric branches electrically connecting said electric nodes and a plurality of protection devices (P) arranged at said electric branches, wherein each protection device includes:
- a first terminal (T_{A}) for coupling to a first branch portion (B_{A}) and a second terminal (T_{B}) for coupling to a second branch portion (B_{B});
- a switching assembly (SD) including one or more switching devices and a magnetic device (MD) electrically connected in series with said switching assembly between said first and second terminals (T_{A}, T_{B});
wherein said electric grid includes one or more control devices (CD) included in or operatively coupled to said protection devices (P),
wherein each control device (CD) is configured to control one or more switching devices of the switching assembly (SD) of one or more protection devices (P) to cause said switching devices to switch selectively between a closed state and open state;
**characterised in that** each protection device (P) includes a magnetic device (MD) having an inductance value (L), which depends on the position of said protection device in said electric grid, for a given current flowing through said protection device.

2. Electric grid, according to claim 1, **characterised in that**, for a given current flowing along a current path of said electric grid according to a given direction, the magnetic device (MD) of a protection device (Pi) arranged in an upstream position along said current path has a lower impedance value than the magnetic device (MD) of a further protection device (P₃) arranged in a downstream position along said current path.

3. Electric grid, according to one of the previous claims, **characterised in that** the magnetic device (MD) of a protection device (P) has an inductance value that can vary in operation depending on the current flowing through said protection device.

4. Electric grid, according to claim 3, **characterised in that** said magnetic device (MD) has:
- a first inductance value (Li), if the current flowing through said protection device (P) is lower than or equal to than a characteristic threshold value (I₀);
- a second inductance value (L₂), if the current flowing through said protection device (P) is higher than a characteristic threshold value (I₀);
wherein said first inductance value (L₁) is lower than said second inductance value (L₂).

5. Electric grid, according to one of the previous claims, **characterised in that** a control device (CD) included in or operatively coupled to a protection device (P) causes one or more switching devices of said switching assembly (SD) to switch from a closed state to an open state to interrupt the current flowing through said protection device, when said control device determines that the current flowing through said protection device exceeds a fault threshold value corresponding to said protection device.

6. Electric grid, according to one of the previous claims, **characterised in that** the switching assembly (SD) of each protection device (P) includes one or more switching devices of solid-state type.

7. Electric grid, according to claim 6, **characterised in that** said switching assembly (SD) includes a pair of switching devices of solid-state type arranged according to an anti-parallel or anti-series configuration to control bi-directional currents flowing through said protection device.

8. Electric grid, according to one of the claims from 6 to 7, **characterised in that** the switching assembly (SD) of each protection device (P) includes a switching device of electromechanical type electrically connected in series to said one or more switching devices of solid-state type.

9. Electric grid, according to one of the claims from 1 to 5, **characterised in that** the switching assembly (SD) of each protection device (P) includes one or more switching devices of electromechanical type.

10. Electric grid, according to claim 9, **characterised in that** the switching assembly (SD) of each protection device (P) includes one or more switching devices of solid-state type electrically connected in parallel to said one or more switching devices of electromechanical type.

11. Electric grid, according to one of the previous claims, **characterised in that** the magnetic device (MD) of each protection device (P) includes:
- a magnetic circuit (10) including a magnetic body (11) and one or more permanent magnets (12) coupled to said magnetic body and feeding said magnetic body with a corresponding magnetic flux (Φ₁), when said permanent magnets are in a magnetized condition;
- one or more excitation coils (13, 13a, 13b) adapted to be fed with a current flowing through said protection device, each excitation coil being wound on said magnetic body to feed said magnetic body with a corresponding magnetic flux (Φ₀, Φ₂, Φ₃), when said excitation coil is fed;
wherein said one or more permanent magnets (12) generate a magnetic flux (Φ₁) bringing said magnetic circuit (10) in a saturated condition in absence of a current feeding said one or more excitation coils,
wherein at least an excitation coil (13, 13a, 13b) generates a magnetic flux (Φ₀, Φ₂) having an opposite direction compared to the direction of the magnetic flux (Φ₁) generated by said permanent magnets (12), when said excitation coil is fed;

12. Electric grid, according to claim 11, **characterised in that** said magnetic device (MD) includes a single excitation coil (13) electrically connected in series to the switching assembly (SD) of said protection device (P) between the first and second terminals (T_{A}, T_{B}) of said protection device.

13. Electric grid, according to claim 11, **characterised in that** said magnetic device (MD) includes a plurality of excitation coils (13a, 13b) electrically connected in series one to another and to the switching assembly (SD) of said protection device (P) between the first and second terminals (T_{A}, T_{B}) of said protection device.

14. Electric grid, according to one of the claims from 11 to 13, **characterised in that** said magnetic body (11) includes one or more airgaps.

15. Electric grid, according to one of the claims 11 to 14, **characterised in that** said magnetic body (11) includes a first branch (111) and a second branch (112) forming a single magnetic loop.

16. Electric grid, according to one of the claims from 11 to 14, **characterised in that** said magnetic body (11) includes a first branch (111), a second branch (112) and a third branch (113), wherein said magnetic circuit includes a first magnetic loop formed by said first and second branches (111, 112) and a second magnetic loop formed by said second and third branches (112, 113).

17. Electric grid, according to claims 12 and 15, **characterised in that** said excitation coil (13) is wound on said first branch (111) and said one or more permanent magnets (12) are coupled to said second branch (112).

18. Electric grid, according to claims 13 and 16, **characterised in that** a first excitation coil (13a) is wound on said first branch (111), a second excitation coil (13b) is wound on said third branch (112) and said one or more permanent magnets (12) are coupled to said second branch (112), wherein said first and second excitation coils are arranged in such a way that currents having opposite directions flow along said first and second excitation coils.
